# DEMANDE DE BREVET EUROPEEN

(11) **EP 4 484 830 A1**
(43) Date de publication de la demande: **01.01.2025**
(21) Numéro de dépôt: 24183327.6
(22) Date de dépôt: 20.06.2024
(51) Int. Cl.: F24C 15/32, F24C 7/08, F24C 15/16, A47J 37/06

(54) **APPAREIL DE CUISSON À CUISSON À AIR CHAUD**

(30) Priorité: 28.06.2023 FR 2306759
(71) Demandeur: SEB S.A., 69130 Ecully (FR)
(72) Inventeur: DUSSART, Marie, 69134 ECULLY CEDEX (FR); BONY, Kévin, 69134 ECULLY CEDEX (FR)
(74) Mandataire: Germain Maureau

(57) **Abrégé**

L'invention concerne un appareil de cuisson (1) comportant une chambre de cuisson (3) ; un ventilateur (7) configuré pour générer un flux d'air dans la chambre de cuisson (3) ; une unité d'entraînement (9) configurée pour entrainer en rotation le ventilateur (7) ; un dispositif de chauffage supérieur (8) configuré pour chauffer le flux d'air généré par le ventilateur (7) ; et un élément de séparation (13) configuré pour être situé dans la chambre de cuisson (3). L'appareil de cuisson (1) présente une première configuration d'utilisation dans laquelle l'appareil de cuisson (1) comporte un premier compartiment de cuisson (14) et un deuxième compartiment de cuisson (15) qui sont délimités par la chambre de cuisson (3) et l'élément de séparation (13), et une deuxième configuration d'utilisation dans laquelle l'appareil de cuisson comporte un unique compartiment de cuisson principal délimité au moins en partie par la chambre de cuisson (3).

## Description

### Domaine technique

La présente invention concerne de manière générale un appareil de cuisson pour la cuisson de produits alimentaires, et en particulier un appareil de multi-cuisson utilisant au moins une fonction de cuisson à air chaud.

### Etat de la technique

Le document US2022/0202239 divulgue un appareil de cuisson électrique pour la cuisson d'aliments notamment selon un mode de cuisson à air chaud. Un tel appareil de cuisson électrique comporte :
- un premier compartiment de cuisson et un deuxième compartiment de cuisson indépendants l'un de l'autre, c'est-à-dire séparés fluidiquement l'un de l'autre, et définissant respectivement des première et deuxième zones de cuisson distinctes l'une de l'autre, et
- des premier et deuxième ventilateurs configurés pour générer respectivement un premier flux d'air dans le premier compartiment de cuisson et un deuxième flux d'air dans le deuxième compartiment de cuisson, et
- des premier et deuxième dispositifs de chauffage configurés pour chauffer respectivement les premier et deuxième flux d'air générés.

Un tel appareil de cuisson électrique permet la cuisson d'aliments dans les premier et deuxième compartiments de cuisson avec différents types de cuisson, à différentes températures et avec des temps de cuisson différents.

Cependant, les dimensions des premier et deuxième compartiments de cuisson ne permettent pas la cuisson d'une quantité importante d'aliments en une seule fois, ni la cuisson d'un plat volumineux, sauf à surdimensionner l'appareil de cuisson électrique, ce qui augmenterait sensiblement les coûts de fabrication et l'encombrement de l'appareil de cuisson électrique.

### Résumé de l'invention

Le problème technique à la base de l'invention consiste notamment à fournir un appareil de cuisson pour la cuisson d'aliments notamment selon un mode de cuisson à air chaud qui soit compact et multifonctionnel, tout en permettant la cuisson d'une quantité importante d'aliments en une seule fois et tout en permettant la cuisson simultanée de différents aliments dans des compartiments de cuisson indépendants.

A cet effet, la présente invention concerne un appareil de cuisson configuré pour la cuisson d'aliments, l'appareil de cuisson comportant :
- une chambre de cuisson,
- un ventilateur configuré pour générer un flux d'air dans la chambre de cuisson,
- une unité d'entraînement configurée pour entrainer en rotation le ventilateur,
- un dispositif de chauffage associé au ventilateur et configuré pour chauffer le flux d'air généré par le ventilateur,
- un dispositif de chauffage inférieur configuré pour chauffer la chambre de cuisson, et
- un élément de séparation configuré pour être situé dans la chambre de cuisson.

L'appareil de cuisson présente une première configuration d'utilisation dans laquelle l'appareil de cuisson comporte un premier compartiment de cuisson et un deuxième compartiment de cuisson qui sont délimités par la chambre de cuisson et par l'élément de séparation et dans laquelle un aliment disposé dans le premier compartiment de cuisson est apte à être chauffé au moins par un parmi le dispositif de chauffage supérieur et le dispositif de chauffage inférieur et un aliment disposé dans le deuxième compartiment de cuisson est apte à être chauffé au moins par un parmi le dispositif de chauffage supérieur et le dispositif de chauffage, et une deuxième configuration d'utilisation dans laquelle l'appareil de cuisson comporte un unique compartiment de cuisson principal délimité au moins en partie par la chambre de cuisson et dans laquelle un aliment disposé dans le compartiment de cuisson principal est apte à être chauffé à la fois par le dispositif de chauffage supérieur et le dispositif de chauffage inférieur.

Une telle configuration de l'appareil de cuisson permet, lorsque l'appareil de cuisson est dans la première configuration d'utilisation, la cuisson d'aliments disposés dans les premier et deuxième compartiments de cuisson avec différents types de cuisson, à différentes températures et avec des temps de cuisson différents, et permet, lorsque l'appareil de cuisson est dans la deuxième configuration d'utilisation, la cuisson, dans le compartiment de cuisson principal, d'aliments contenus dans un plat volumineux ou d'une quantité importante d'aliments.

Ainsi, l'appareil de cuisson selon la présente invention permet la cuisson d'aliments très variés tout en étant compact.

L'appareil de cuisson peut en outre présenter une ou plusieurs des caractéristiques suivantes, qui peuvent être prises seules ou en combinaison.

Selon un mode de réalisation de l'invention, lorsque l'appareil de cuisson est dans la deuxième configuration d'utilisation, le compartiment de cuisson principal est directement exposé à la fois au dispositif de chauffage supérieur et au dispositif de chauffage inférieur.

Selon un mode de réalisation de l'invention, les premier et deuxième compartiments de cuisson sont indépendants l'un de l'autre, c'est-à-dire séparés fluidiquement l'un de l'autre, lorsque l'appareil de cuisson est dans la première configuration d'utilisation. De façon avantageuse, l'élément de séparation est configuré pour séparer fluidiquement le premier compartiment de cuisson et le deuxième compartiment de cuisson (c'est-à-dire pour empêcher une communication fluidique entre les premier et deuxième compartiments de cuisson au travers de l'élément de séparation) lorsque l'appareil de cuisson est dans la première configuration d'utilisation.

Selon un mode de réalisation de l'invention, l'appareil de cuisson est de type four.

Selon un mode de réalisation de l'invention, le compartiment de cuisson principal présente un volume de cuisson correspondant sensiblement à la somme des volumes de cuisson des premier et deuxième compartiments de cuisson. Un rapport du volume de cuisson du compartiment de cuisson principal sur la somme des volumes de cuisson des premier et deuxième compartiments de cuisson peut par exemple être compris entre 1,1 et 1,2.

Selon un mode de réalisation de l'invention, l'appareil de cuisson comporte une unité de commande configurée pour commander le fonctionnement de l'appareil de cuisson selon un mode de cuisson à air chaud. Ainsi, l'appareil de cuisson est configuré pour cuire des aliments contenus dans la chambre de cuisson, et par exemple dans le compartiment de cuisson principal ou au moins l'un des premier et deuxième compartiments de cuisson, selon un mode de cuisson à air chaud.

Selon un mode de réalisation de l'invention, l'élément de séparation est configuré pour séparer, c'est-à-dire pour diviser, la chambre de cuisson en le premier compartiment de cuisson et le deuxième compartiment de cuisson lorsque l'appareil de cuisson est dans la première configuration d'utilisation.

Selon un mode de réalisation de l'invention, l'élément de séparation forme au moins une paroi, par exemple une paroi latérale, une paroi supérieure ou une paroi inférieure, de chacun des premier et deuxième compartiments.

Selon un mode de réalisation de l'invention, l'élément de séparation présente une forme générale de plaque, et peut par exemple être une plaque de séparation.

Selon un mode de réalisation de l'invention, l'élément de séparation est métallique.

Selon un mode de réalisation de l'invention, la chambre de cuisson comporte une ouverture d'accès, et l'appareil de cuisson comporte une porte mobile entre une position de fermeture dans laquelle la porte ferme l'ouverture d'accès et empêche un accès à la chambre de cuisson, et une position d'ouverture dans laquelle la porte libère l'ouverture d'accès et autorise l'accès à la chambre de cuisson. Lorsque la porte occupe la position d'ouverture et que l'appareil de cuisson est dans la première configuration d'utilisation, la porte autorise un accès à la fois aux premier et deuxième compartiments de cuisson, et lorsque la porte occupe la position d'ouverture et que l'appareil de cuisson est dans la deuxième configuration d'utilisation, la porte autorise un accès au compartiment de cuisson principal.

Selon un mode de réalisation de l'invention, l'appareil de cuisson comporte une première porte associée au premier compartiment de cuisson et mobile entre une position de fermeture dans laquelle la première porte empêche un accès au premier compartiment de cuisson et une position d'ouverture dans laquelle la première porte autorise l'accès au premier compartiment de cuisson, et une deuxième porte associée au deuxième compartiment de cuisson et mobile entre une position de fermeture dans laquelle la deuxième porte empêche un accès au deuxième compartiment de cuisson et une position d'ouverture dans laquelle la deuxième porte autorise l'accès au deuxième compartiment de cuisson.

Selon un mode de réalisation de l'invention, la porte est montée pivotante autour d'un axe de pivotement qui est sensiblement horizontal lorsque l'appareil de cuisson repose sur une surface horizontale. De façon avantageuse, l'axe de pivotement est situé à proximité d'un bord inférieur avant d'un bâti de l'appareil de cuisson.

Selon un mode de réalisation de l'invention, la première porte et la deuxième porte sont montées pivotantes autour de l'axe de pivotement qui est sensiblement horizontal lorsque l'appareil de cuisson repose sur une surface horizontale.

Selon un mode de réalisation de l'invention, l'appareil de cuisson comporte une première cuve de cuisson et une deuxième cuve de cuisson configurées pour recevoir des aliments à cuire et configurées pour être reçues au moins en partie respectivement dans le premier compartiment de cuisson et le deuxième compartiment de cuisson. De façon avantageuse, la première cuve de cuisson et la deuxième cuve de cuisson sont configurées pour être introduites respectivement dans le premier compartiment de cuisson et le deuxième compartiment de cuisson via l'ouverture d'accès.

Selon un mode de réalisation de l'invention, la première cuve de cuisson et la deuxième cuve de cuisson sont indépendantes l'une de l'autre, et sont aptes à être retirées hors de la chambre de cuisson de manière indépendante.

Selon un mode de réalisation de l'invention, la première cuve de cuisson et la deuxième cuve de cuisson sont configurées pour autoriser un déplacement libre de la porte ou de la première porte et de la deuxième porte entre la position de fermeture et la position d'ouverture lorsque la première cuve de cuisson et la deuxième cuve de cuisson sont situées respectivement à l'intérieur du premier compartiment de cuisson et du deuxième compartiment de cuisson.

Selon un mode de réalisation de l'invention, chacune de la première cuve de cuisson et de la deuxième cuve de cuisson comporte un corps de cuve et une poignée de préhension qui est fixée de manière amovible au corps de cuve respectif.

Une telle configuration de l'invention permet l'insertion de la première cuve de cuisson et de la deuxième cuve de cuisson à l'intérieur de la chambre de cuisson, puis de retirer les poignées de préhension afin de ne pas encombrer inutilement la chambre de cuisson, ni de gêner la fermeture de la porte ou de la première porte et de la deuxième porte.

Selon un mode de réalisation de l'invention, chaque poignée de préhension s'étend au moins en partie en regard d'une face avant du corps de cuve respectif.

Selon un mode de réalisation de l'invention, la première cuve de cuisson et la deuxième cuve de cuisson forment respectivement un premier tiroir de cuisson et un deuxième tiroir de cuisson.

Selon un mode de réalisation de l'invention, le dispositif de chauffage supérieur est disposé dans une partie supérieure de l'appareil de cuisson.

Selon un mode de réalisation de l'invention, le dispositif de chauffage supérieur est situé en regard de la chambre de cuisson. Une telle disposition du dispositif de chauffage supérieur permet de pouvoir gratiner, en fin de cuisson, les aliments contenus dans le compartiment de cuisson principal ou dans au moins l'un des premier et deuxième compartiments de cuisson.

Selon un mode de réalisation de l'invention, le dispositif de chauffage supérieur comporte un élément chauffant résistif.

Selon un mode de réalisation de l'invention, le dispositif de chauffage inférieur est disposé dans une partie inférieure de l'appareil de cuisson. Le dispositif de chauffage inférieur peut par exemple être disposé dans une partie inférieure de la chambre de cuisson.

Selon un mode de réalisation de l'invention, le dispositif de chauffage inférieur comporte un élément chauffant résistif.

Selon un mode de réalisation de l'invention, lorsque l'appareil de cuisson est dans la première configuration d'utilisation, l'élément de séparation est configuré pour autoriser un écoulement du flux d'air, généré par le ventilateur, dans le premier compartiment de cuisson et pour empêcher un écoulement dudit flux d'air dans le deuxième compartiment de cuisson.

Selon un mode de réalisation de l'invention, l'appareil de cuisson présente une première variante de la première configuration d'utilisation dans laquelle l'élément de séparation est configuré pour s'étendre sensiblement horizontalement et les premier et deuxième compartiments de cuisson sont configurés pour être disposés l'un au-dessus de l'autre, lorsque l'appareil de cuisson repose sur une surface horizontale.

Selon un mode de réalisation de l'invention, lorsque l'appareil de cuisson est dans la première variante de la première configuration d'utilisation, un aliment disposé dans le premier compartiment de cuisson est apte à être chauffé uniquement par le dispositif de chauffage supérieur, et un aliment disposé dans le deuxième compartiment de cuisson est apte à être chauffé uniquement par le dispositif de chauffage inférieur. En d'autres termes, lorsque l'appareil de cuisson est dans la première variante de la première configuration d'utilisation, le premier compartiment de cuisson est directement exposé uniquement au dispositif de chauffage supérieur, et le deuxième compartiment de cuisson est directement exposé uniquement au dispositif de chauffage inférieur.

Selon un mode de réalisation de l'invention, l'appareil de cuisson est configuré pour générer un flux d'air chaud uniquement dans le premier compartiment de cuisson lorsque l'appareil de cuisson est dans la première variante de la première configuration d'utilisation.

Selon un mode de réalisation de l'invention, l'appareil de cuisson présente une deuxième variante de la première configuration d'utilisation dans laquelle l'élément de séparation est configuré pour s'étendre sensiblement verticalement et les premier et deuxième compartiments de cuisson sont configurés pour être disposés l'un à côté de l'autre, lorsque l'appareil de cuisson repose sur une surface horizontale.

Selon un mode de réalisation de l'invention, l'appareil de cuisson est configuré pour générer respectivement un premier flux d'air chaud dans le premier compartiment de cuisson mais également un deuxième flux d'air chaud dans le deuxième compartiment de cuisson lorsque l'appareil de cuisson est dans la deuxième variante de la première configuration d'utilisation.

Selon un mode de réalisation de l'invention, l'appareil de cuisson comporte deux ventilateurs configurés pour générer respectivement un premier flux d'air dans le premier compartiment de cuisson et un deuxième flux d'air dans le deuxième compartiment de cuisson, et deux dispositifs de chauffage supérieurs associés respectivement aux deux ventilateurs et configurés pour chauffer respectivement les premier et deuxième flux d'air générés par les deux ventilateurs. De façon avantageuse, les deux dispositifs de chauffage supérieurs sont configurés pour être situés respectivement en regard des premier et deuxième compartiments de cuisson.

Selon un mode de réalisation de l'invention, l'appareil de cuisson comporte deux dispositifs de chauffage inférieurs configurés pour chauffer la chambre de cuisson et pour être associés respectivement aux premier et deuxième compartiments de cuisson.

Selon un mode de réalisation de l'invention, lorsque l'appareil de cuisson est dans la deuxième variante de la première configuration d'utilisation, un aliment disposé dans le premier compartiment de cuisson est apte à être chauffé à la fois par le dispositif de chauffage supérieur respectif et le dispositif de chauffage inférieur respectif, et un aliment disposé dans le deuxième compartiment de cuisson est apte à être chauffé à la fois par le dispositif de chauffage supérieur respectif et le dispositif de chauffage inférieur respectif. En d'autres termes, lorsque l'appareil de cuisson est dans la deuxième variante de la première configuration d'utilisation, le premier compartiment de cuisson est directement exposé à la fois au dispositif de chauffage supérieur respectif et au dispositif de chauffage inférieur respectif, et le deuxième compartiment de cuisson est directement exposé à la fois au dispositif de chauffage supérieur respectif et au dispositif de chauffage inférieur respectif.

Selon un mode de réalisation de l'invention, l'appareil de cuisson comporte deux unités d'entraînement distinctes associées respectivement aux deux ventilateurs.

Selon un mode de réalisation de l'invention, l'appareil de cuisson comporte une interface utilisateur, par exemple prévue sur le bâti de l'appareil de cuisson, configurée pour permettre à un utilisateur de sélectionner au moins un paramètre de fonctionnement de l'appareil de cuisson, et par exemple au moins un mode de fonctionnement de l'appareil de cuisson.

Selon un mode de réalisation de l'invention, l'élément de séparation est amovible, l'élément de séparation étant situé dans la chambre de cuisson lorsque l'appareil de cuisson est dans la première configuration d'utilisation et pouvant être retiré de la chambre de cuisson, c'est-à-dire situé hors de la chambre de cuisson, lorsque l'appareil de cuisson est dans la deuxième configuration d'utilisation. Une telle configuration de l'élément de séparation permet de limiter les coûts de fabrication de l'appareil de cuisson, tout en permettant un nettoyage aisé de l'élément de séparation.

Selon un mode de réalisation de l'invention, l'élément de séparation est configuré pour être inséré dans et retiré hors de la chambre de cuisson via l'ouverture d'accès.

Selon un mode de réalisation de l'invention, l'élément de séparation est monté mobile dans la chambre de cuisson entre une première position dans laquelle l'élément de séparation et la chambre de cuisson délimitent au moins le premier compartiment de cuisson et le deuxième compartiment de cuisson, et une deuxième position dans laquelle l'élément de séparation et la chambre de cuisson délimitent l'unique compartiment de cuisson principal. Une telle configuration de l'élément de séparation permet à un utilisateur de pouvoir aisément déplacer l'appareil de cuisson entre les première et deuxième configurations d'utilisation.

Selon un mode de réalisation de l'invention, l'élément de séparation est configuré pour être déplacé manuellement entre les première et deuxième positions.

Selon un mode de réalisation de l'invention, l'appareil de cuisson comporte un mécanisme de déplacement configuré pour déplacer l'élément de séparation entre les première et deuxième positions.

Selon un mode de réalisation de l'invention, l'interface utilisateur est configurée pour permettre à un utilisateur de sélectionner une configuration d'utilisation de l'appareil de cuisson parmi les première et deuxième configurations d'utilisation. De façon avantageuse, l'unité de commande est configurée pour commander le fonctionnement du mécanisme de déplacement en fonction de la configuration d'utilisation sélectionnée par l'utilisateur, de manière à déplacer automatiquement l'élément de séparation entre les première et deuxième positions.

Selon un mode de réalisation de l'invention, l'élément de séparation est monté mobile en translation, et par exemple monté coulissant, par rapport à un bâti de l'appareil de cuisson selon une direction de déplacement.

Selon un mode de réalisation de l'invention, la direction de déplacement s'étend sensiblement perpendiculairement à un plan d'extension de l'élément de séparation.

Selon un mode de réalisation de l'invention, la direction de déplacement est sensiblement horizontale lorsque l'appareil de cuisson repose sur une surface horizontale.

Selon un mode de réalisation de l'invention, la direction de déplacement est sensiblement verticale lorsque l'appareil de cuisson repose sur une surface horizontale.

Selon un mode de réalisation de l'invention, l'axe de pivotement de la porte s'étend sensiblement perpendiculairement à la direction de déplacement.

Selon un autre mode de réalisation de l'invention, l'axe de pivotement de la porte s'étend sensiblement parallèlement à la direction de déplacement.

Selon un mode de réalisation de l'invention, l'élément de séparation est configuré pour former une paroi de fond du compartiment de cuisson principal lorsque l'élément de séparation occupe la deuxième position.

Selon un mode de réalisation de l'invention, l'élément de séparation est configuré pour former une paroi latérale du compartiment de cuisson principal lorsque l'élément de séparation occupe la deuxième position.

Selon un mode de réalisation de l'invention, l'élément de séparation comporte une partie de préhension configurée pour à être saisie par un utilisateur. La présence d'une telle partie de préhension permet à un utilisateur de pouvoir aisément déplacer l'élément de séparation entre les première et deuxième positions ou de retirer aisément l'élément de séparation hors de la chambre de cuisson.

Selon un mode de réalisation de l'invention, le dispositif de chauffage inférieur est configuré pour être recouvert par l'élément de séparation lorsque l'élément de séparation occupe la deuxième position.

Selon un mode de réalisation de l'invention, l'appareil de cuisson comporte un dispositif de génération de vapeur configuré pour générer un flux de vapeur dans la chambre de cuisson.

Selon un mode de réalisation de l'invention, un aliment disposé dans le premier compartiment de cuisson est apte à être en contact avec le flux de vapeur généré par le dispositif de génération de vapeur et/ou un aliment disposé dans le deuxième compartiment de cuisson est apte à être en contact avec le flux de vapeur généré par le dispositif de génération de vapeur lorsque l'appareil de cuisson est dans la première configuration d'utilisation, et un aliment disposé dans le compartiment de cuisson principal est apte à être en contact avec le flux de vapeur généré par le dispositif de génération de vapeur lorsque l'appareil de cuisson est dans la deuxième configuration d'utilisation.

Selon un mode de réalisation de l'invention, l'unité de commande est configurée pour commander le fonctionnement de l'appareil de cuisson selon un mode de cuisson sous vapeur, et notamment pour commander le fonctionnement de l'appareil de cuisson simultanément selon un mode de cuisson à air chaud et sous vapeur.

Selon un mode de réalisation de l'invention, l'unité de commande est configurée pour commander le fonctionnement du dispositif de génération de vapeur indépendamment du fonctionnement du dispositif de chauffage supérieur et/ou du dispositif de chauffage inférieur lorsque l'appareil de cuisson est dans la première configuration d'utilisation ou dans la deuxième configuration d'utilisation.

Selon un mode de réalisation de l'invention, l'unité de commande est configurée pour commander le fonctionnement du dispositif de génération de vapeur et simultanément commander le fonctionnement du dispositif de chauffage supérieur et/ou du dispositif de chauffage inférieur lorsque l'appareil de cuisson est dans la première configuration d'utilisation ou dans la deuxième configuration d'utilisation. En d'autres termes, l'appareil de cuisson est configuré pour réaliser une cuisson qui combine l'utilisation du générateur de vapeur, du dispositif de chauffage supérieur et du ventilateur dans le premier compartiment de cuisson, et la réalisation simultanée d'une cuisson qui utilise uniquement le dispositif de chauffage inférieur dans le deuxième compartiment de cuisson par exemple. Une telle configuration de l'invention permet de réaliser simultanément des cuissons différentes dans un même appareil de cuisson et ainsi de gagner du temps lors de la réalisation de préparations culinaires différentes.

### Brève description des figures

La présente invention sera bien comprise à l'aide de la description qui suit en référence aux figures annexées, dans lesquelles des signes de références identiques correspondent à des éléments structurellement et / ou fonctionnellement identiques ou similaires.
La figure 1 est une vue partielle en perspective avant d'un appareil de cuisson selon un premier mode réalisation de l'invention, montrant l'appareil de cuisson dans une première variante d'une première configuration d'utilisation ;
La figure 2 est une vue partielle en perspective avant de l'appareil de cuisson de la figure 1, montrant la dépose d'un élément de séparation appartenant à l'appareil de cuisson ;
La figure 3 est une vue partielle en perspective avant de l'appareil de cuisson de la figure 1, montrant l'appareil de cuisson dans une deuxième configuration d'utilisation ;
La figure 4 est une autre vue partielle en perspective avant de l'appareil de cuisson de la figure 1, montrant l'appareil de cuisson dans une deuxième configuration d'utilisation ;
La figure 5 est une vue partielle en perspective avant d'un appareil de cuisson selon un deuxième mode réalisation de l'invention, montrant l'appareil de cuisson dans une deuxième variante d'une première configuration d'utilisation ;
La figure 6 est une vue partielle en perspective avant de l'appareil de cuisson de la figure 5, montrant la dépose d'un élément de séparation appartenant à l'appareil de cuisson ;
La figure 7 est une vue partielle en perspective avant de l'appareil de cuisson de la figure 5, montrant l'appareil de cuisson dans une deuxième configuration d'utilisation ;
La figure 8 est une autre vue partielle en perspective avant de l'appareil de cuisson de la figure 7, montrant l'appareil de cuisson dans une deuxième configuration d'utilisation ;
La figure 9 est une vue partielle en perspective avant d'un appareil de cuisson selon un troisième mode réalisation de l'invention, montrant l'appareil de cuisson dans une première configuration d'utilisation ;
La figure 10 est une vue partielle en perspective avant de l'appareil de cuisson de la figure 9, montrant l'appareil de cuisson dans une deuxième configuration d'utilisation ;
La figure 11 est une vue partielle en perspective avant d'un appareil de cuisson selon encore un quatrième mode réalisation de l'invention, montrant l'appareil de cuisson dans une première configuration d'utilisation ;
La figure 12 est une vue partielle en perspective avant de l'appareil de cuisson de la figure 11, montrant l'appareil de cuisson dans une deuxième configuration d'utilisation.

### Description détaillée

Dans le présent document, les termes « inférieur » et « supérieur » employés pour décrire l'appareil de cuisson font références à l'appareil de cuisson en situation d'usage, c'est-à-dire reposant sur une surface horizontale.

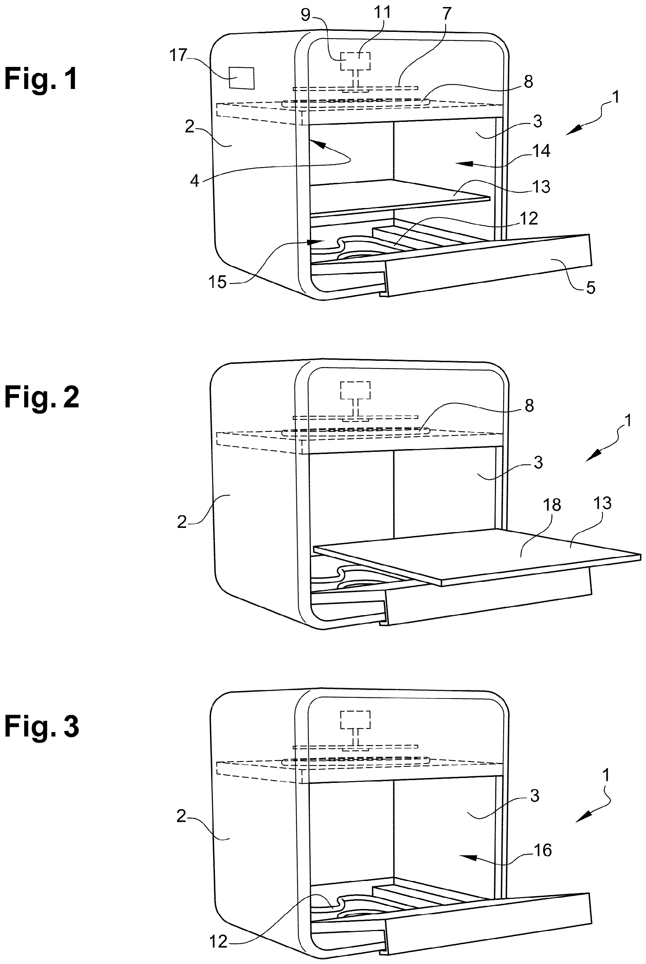

Les figures 1 à 4 représentent un appareil de cuisson 1 selon un premier mode de réalisation de l'invention. L'appareil de cuisson 1 est configuré pour la cuisson d'aliments, tels que de la viande, du poisson, des légumes ou d'autres produits alimentaires, notamment selon un mode de cuisson à air chaud.

L'appareil de cuisson 1 comporte un bâti 2 délimitant une chambre de cuisson 3 pourvue d'une ouverture d'accès 4, et une porte 5 mobile entre une position de fermeture dans laquelle la porte 5 ferme l'ouverture d'accès 4 et empêche un accès à la chambre de cuisson 3, et une position d'ouverture dans laquelle la porte 5 libère l'ouverture d'accès 4 et autorise l'accès à la chambre de cuisson 3. La porte 5 peut par exemple être montée pivotante autour d'un axe de pivotement qui est sensiblement horizontal lorsque l'appareil de cuisson 1 repose sur une surface horizontale et qui est avantageusement situé à proximité d'un bord inférieur avant du bâti 2.

L'appareil de cuisson 1 comporte en outre un ventilateur 7 configuré pour générer un flux d'air dans la chambre de cuisson 3, et un dispositif de chauffage supérieur 8 configuré pour chauffer le flux d'air généré par le ventilateur 7. De façon avantageuse, le dispositif de chauffage supérieur 8 comporte un élément chauffant résistif et est situé en regard de la chambre de cuisson 3.

L'appareil de cuisson 1 comporte de plus une unité d'entraînement 9 qui est pourvue d'un moteur d'entraînement 11 et qui est configurée pour entrainer en rotation le ventilateur 7 autour d'un axe de rotation. De façon avantageuse, l'axe de rotation est sensiblement vertical lorsque l'appareil de cuisson 1 repose sur une surface horizontale. Le ventilateur 7 peut par exemple être directement couplé en rotation à un arbre de sortie du moteur d'entraînement 11, ou être couplé à ce dernier via un mécanisme de transmission de mouvement configuré pour transmettre un mouvement de rotation du moteur d'entraînement 11 au ventilateur 7.

Selon le premier mode de réalisation de l'invention, l'unité d'entraînement 9 et le ventilateur 7 sont disposés au-dessus du dispositif de chauffage supérieur 8, et ne sont pas accessibles pour un utilisateur. L'unité d'entraînement 9 et le ventilateur 7 peuvent par exemple être disposés dans un logement interne disposé au-dessus de la chambre de cuisson 3 et délimité par le bâti 2.

L'appareil de cuisson 1 comporte également un dispositif de chauffage inférieur 12 qui est disposé dans une partie inférieure de la chambre de cuisson 3 et qui est configuré pour chauffer la chambre de cuisson 3 par conduction. De façon avantageuse, le dispositif de chauffage inférieur 12 comporte un élément chauffant résistif.

L'appareil de cuisson 1 comporte de plus un élément de séparation 13, tel qu'une plaque de séparation, configuré pour être situé dans la chambre de cuisson 3. L'élément de séparation 13 peut par exemple être métallique.

L'appareil de cuisson 1 présente plus particulièrement une première configuration d'utilisation dans laquelle l'appareil de cuisson 1 comporte un premier compartiment de cuisson 14 et un deuxième compartiment de cuisson 15 qui sont délimités par l'élément de séparation 13 et la chambre de cuisson 3 et qui sont indépendants l'un de l'autre, et une deuxième configuration d'utilisation dans laquelle l'appareil de cuisson 1 comporte un unique compartiment de cuisson principal 16 délimité au moins en partie par la chambre de cuisson 3. De façon avantageuse, l'élément de séparation 13 est configuré pour séparer la chambre de cuisson 3 en le premier compartiment de cuisson 14 et le deuxième compartiment de cuisson 15 lorsque l'appareil de cuisson 1 est dans la première configuration d'utilisation.

Les premier et deuxième compartiments de cuisson 14, 15 peuvent par exemple présenter des volumes de cuisson identiques ou différents et des formes identiques ou différentes, et le compartiment de cuisson principal 16 présente avantageusement un volume de cuisson correspondant sensiblement à la somme des volumes de cuisson des premier et deuxième compartiments de cuisson 14, 15.

Lorsque la porte 5 occupe la position d'ouverture et que l'appareil de cuisson 1 est dans la première configuration d'utilisation, la porte 5 autorise un accès aux premier et deuxième compartiments de cuisson 14, 15 via l'ouverture d'accès 4, et lorsque la porte 5 occupe la position d'ouverture et que l'appareil de cuisson 1 est dans la deuxième configuration d'utilisation, la porte 5 autorise un accès au compartiment de cuisson principal 16 via l'ouverture d'accès 4.

Selon le premier mode de réalisation de l'invention, l'élément de séparation 13 est amovible, et est configuré pour être inséré dans et retiré hors de la chambre de cuisson 3 via l'ouverture d'accès 4. La première configuration d'utilisation de l'appareil de cuisson 1 correspond plus particulièrement à une configuration d'utilisation dans laquelle l'élément de séparation 13 est situé dans la chambre de cuisson 3, tandis que la deuxième configuration d'utilisation de l'appareil de cuisson 1 correspond plus particulièrement à une configuration d'utilisation dans laquelle l'élément de séparation 13 est déposé, c'est-à-dire est situé hors de la chambre de cuisson 3.

De façon avantageuse, l'appareil de cuisson 1, et plus particulièrement les parois latérales de la chambre de cuisson 3, peut être pourvu de dispositifs de fixation (non représentés sur les figures), tels que des rainures ou glissières de fixation ou similaires, configurés pour permettre l'insertion et la retenue des portions latérales de l'élément de séparation 13 dans la chambre de cuisson 3.

Selon le premier mode de réalisation de l'invention, et donc selon une première variante de la première configuration d'utilisation, l'élément de séparation 13 est configuré pour s'étendre sensiblement horizontalement et les premier et deuxième compartiments de cuisson 14, 15 sont configurés pour être disposés l'un au-dessus de l'autre, lorsque l'appareil de cuisson 1 repose sur une surface horizontale et est dans la première configuration d'utilisation. Ainsi, l'appareil de cuisson 1 est configuré pour générer un flux d'air chaud uniquement dans le premier compartiment de cuisson 14 lorsque l'appareil de cuisson 1 est dans la première configuration d'utilisation, et pour générer un flux d'air chaud dans le compartiment de cuisson principal 16 lorsque l'appareil de cuisson 1 est dans la deuxième configuration d'utilisation.

Selon le premier mode de réalisation de l'invention, lorsque l'appareil de cuisson 1 est dans la première variante de la première configuration d'utilisation, le premier compartiment de cuisson 14 est directement exposé uniquement au dispositif de chauffage supérieur 8, et le deuxième compartiment de cuisson 15 est directement exposé uniquement au dispositif de chauffage inférieur 12. Ainsi, un aliment disposé dans le premier compartiment de cuisson 14 est apte à être chauffé uniquement par, ou du moins essentiellement par, le dispositif de chauffage supérieur 8, et un aliment disposé dans le deuxième compartiment de cuisson 15 est apte à être chauffé uniquement par, ou du moins essentiellement par, le dispositif de chauffage inférieur 12.

L'appareil de cuisson 1 comporte également une unité de commande 17 qui comporte par exemple un contrôleur, tel qu'un microcontrôleur, ou un processeur, tel qu'un microprocesseur, et qui est configurée pour commander le fonctionnement de l'appareil de cuisson 1, et notamment du dispositif de chauffage supérieur 8, du dispositif de chauffage inférieur 12, du moteur d'entraînement 11 et du ventilateur 7.

L'unité de commande 17 est plus particulièrement configurée pour commander le fonctionnement de l'appareil de cuisson 1 selon un mode de cuisson à air chaud. L'utilisateur peut alors commander un mode de cuisson à air chaud à l'aide d'une interface utilisateur prévue sur le bâti 2, et l'unité de commande 17 commande alors une activation du moteur d'entraînement 11 de manière à entraîner en rotation le ventilateur 7 et générer un flux d'air au sein de la chambre de cuisson 3 et également une alimentation électrique du dispositif de chauffage supérieur 8 de manière à chauffer ce flux d'air. Un tel mode de cuisson peut par exemple être utilisé pour cuire des aliments contenus dans le compartiment de cuisson principal 16 lorsque l'appareil de cuisson 1 est dans la deuxième configuration d'utilisation, ou pour cuire des aliments contenus dans le premier compartiment de cuisson 14 lorsque l'appareil de cuisson 1 est dans la première configuration d'utilisation. Des aliments contenus dans le deuxième compartiment de cuisson 15 peuvent être cuits en alimentant électriquement le dispositif de chauffage inférieur 12.

L'appareil de cuisson 1 selon la présente invention permet également de pouvoir gratiner les aliments contenus dans le compartiment de cuisson principal 16 ou dans le premier compartiment de cuisson 14. Par exemple, en sélectionnant un mode de cuisson gratinée, l'unité de commande 17 peut commander, en fin de cycle de cuisson à air chaud, un arrêt du moteur d'entraînement 11 tout en maintenant une alimentation électrique du dispositif de chauffage supérieur 8, ce qui assure, du fait de la position de ce dernier en regard de la chambre de cuisson 3, une cuisson gratinée des aliments.

De façon avantageuse, l'appareil de cuisson 1, et plus particulièrement les parois latérales de la chambre de cuisson 3, peut être pourvu de dispositifs de retenue (non représentés sur les figures) configurés pour permettre l'insertion et la retenue d'accessoires de cuisson, tels que des plaques de cuisson, des grilles de cuisson ou lèchefrites, dans le compartiment de cuisson principal 16 et dans les premier et deuxième compartiments de cuisson 14, 15.

Afin de faciliter le retrait et l'insertion de l'élément de séparation 13 dans et hors de la chambre de cuisson 3, l'élément de séparation 13 peut avantageusement être pourvu d'une partie de préhension 18 configurée pour à être saisie par un utilisateur.

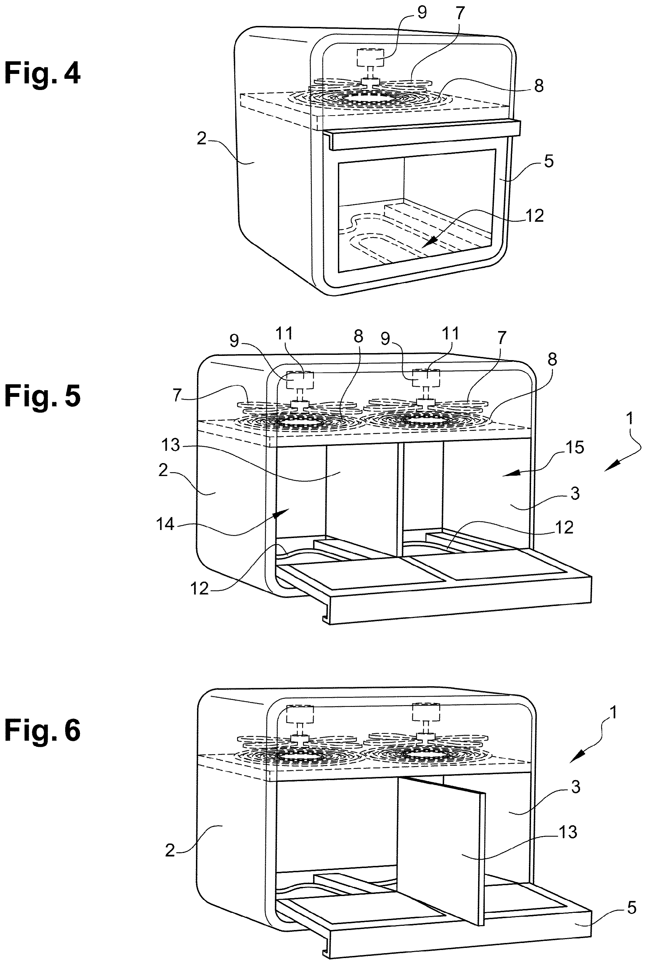

Les figures 5 à 8 représentent un appareil de cuisson 1 selon un deuxième mode de réalisation de l'invention et selon une deuxième variante de la première configuration d'utilisation, qui diffère du premier mode de réalisation essentiellement en ce que l'élément de séparation 13 est configuré pour s'étendre sensiblement verticalement et en ce que les premier et deuxième compartiments de cuisson 14, 15 sont configurés pour être disposés l'un à côté de l'autre, lorsque l'appareil de cuisson 1 repose sur une surface horizontale et est dans la première configuration d'utilisation.

Selon le deuxième mode de réalisation de l'invention, et donc selon une deuxième variante de la première configuration d'utilisation, l'appareil de cuisson 1 est configuré pour générer respectivement un premier flux d'air chaud dans le premier compartiment de cuisson 14 et un deuxième flux d'air chaud dans le deuxième compartiment de cuisson 15, lorsque l'appareil de cuisson 1 est dans la première configuration d'utilisation. A cet effet, l'appareil de cuisson 1 comporte deux ventilateurs 7 configurés pour générer respectivement les premier et deuxième flux d'air respectivement dans les premier et deuxième compartiments de cuisson 14, 15, et deux dispositifs de chauffage supérieurs 8 associés respectivement aux deux ventilateurs 7 et configurés pour chauffer respectivement les premier et deuxième flux d'air générés par les deux ventilateurs 7. De façon avantageuse, les deux dispositifs de chauffage supérieurs 8 sont configurés pour être situés respectivement en regard des premier et deuxième compartiments de cuisson 14, 15. L'unité de commande 17 est avantageusement configurée pour commander indépendamment les deux ventilateurs 7 et pour commander indépendamment les deux dispositifs de chauffage supérieurs 8.

Selon le deuxième mode de réalisation de l'invention, l'appareil de cuisson 1 comporte deux unités d'entraînement 9 distinctes associées respectivement aux deux ventilateurs 7. Cependant, selon une variante de réalisation de l'invention, l'appareil de cuisson 1 pourrait comporter une unique unité d'entraînement 9, et donc un unique moteur d'entraînement 11, configurée pour entraîner en rotation simultanément les deux ventilateurs 7.

Selon un tel mode de réalisation de l'invention, l'appareil de cuisson 1 comporte avantageusement deux dispositifs de chauffage inférieurs 12 configurés pour être associés respectivement aux premier et deuxième compartiments de cuisson 14, 15.

Selon le deuxième mode de réalisation de l'invention, lorsque l'appareil de cuisson 1 est dans la première configuration d'utilisation, le premier compartiment de cuisson 14 est directement exposé à la fois au dispositif de chauffage supérieur 8 et au dispositif de chauffage inférieur 12, et le deuxième compartiment de cuisson 15 est directement exposé à la fois au dispositif de chauffage supérieur 8 et au dispositif de chauffage inférieur 12. Ainsi, un aliment disposé dans le premier compartiment de cuisson 14 est apte à être chauffé à la fois par le dispositif de chauffage supérieur 8 et le dispositif de chauffage inférieur 12, et un aliment disposé dans le deuxième compartiment de cuisson 15 est apte à être chauffé à la fois par le dispositif de chauffage supérieur 8 et le dispositif de chauffage inférieur 12.

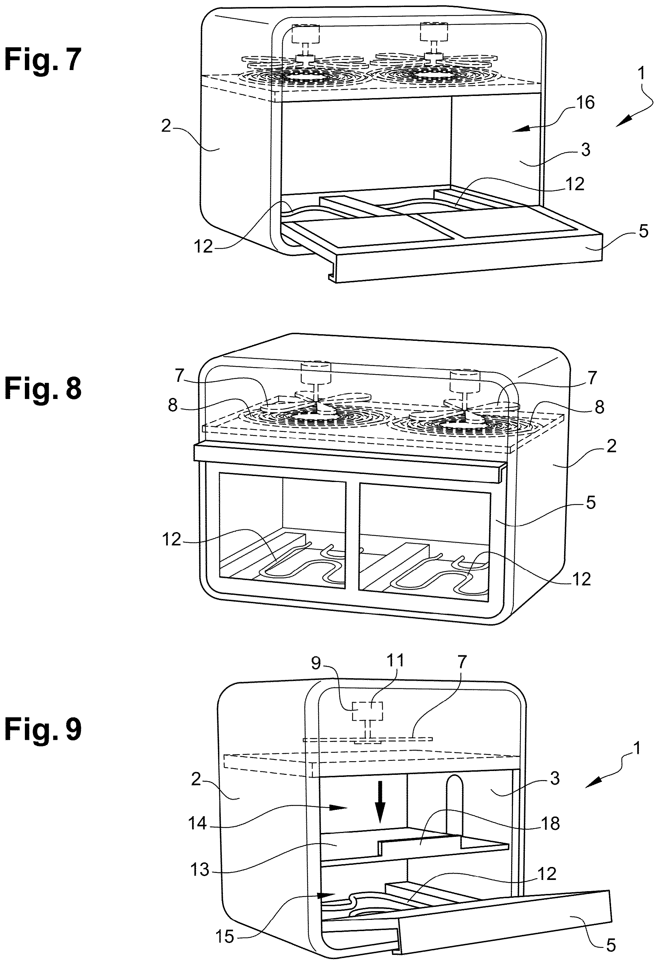

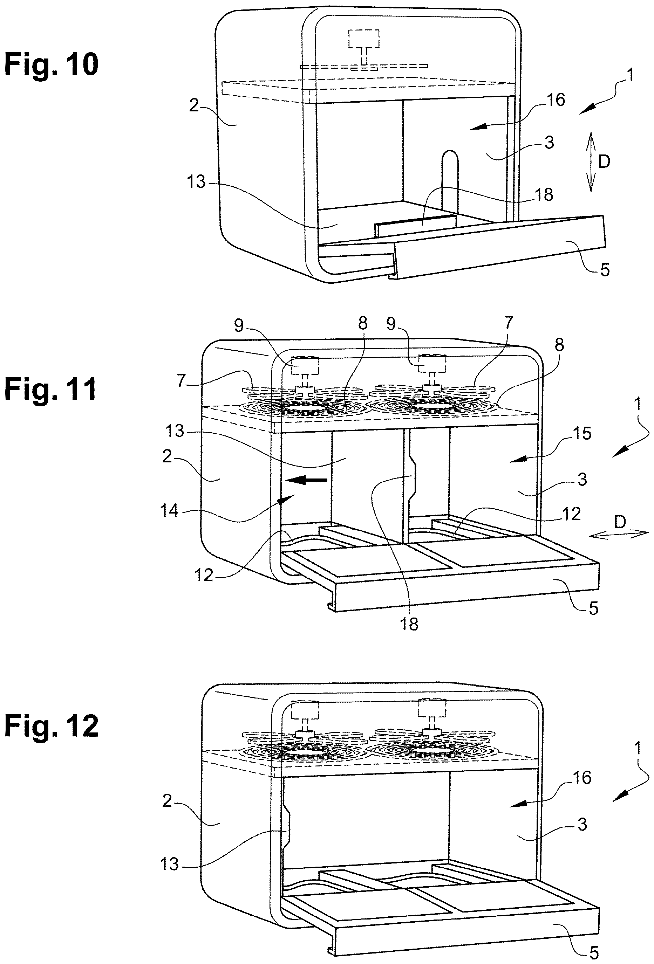

Les figures 9 et 10 représentent un appareil de cuisson 1 selon un troisième mode de réalisation de l'invention qui diffère du premier mode de réalisation essentiellement en ce que l'élément de séparation 13 est monté mobile dans la chambre de cuisson 3 entre une première position (voir la figure 9) dans laquelle l'élément de séparation 13 et la chambre de cuisson 3 délimitent les premier et deuxième compartiments de cuisson 14, 15, et une deuxième position (voir la figure 10) dans lequel l'élément de séparation 13 et la chambre de cuisson 3 délimitent l'unique compartiment de cuisson principal 16. De façon avantageuse, l'élément de séparation 13 est monté coulissant par rapport au bâti 2 de l'appareil de cuisson 1 selon une direction de déplacement D qui s'étend sensiblement perpendiculairement à un plan d'extension de l'élément de séparation 13.

Selon le troisième mode de réalisation de l'invention illustré aux figures 9 et 10, la direction de déplacement D est sensiblement verticale lorsque l'appareil de cuisson 1 repose sur une surface horizontale, et l'axe de pivotement de la porte 5 s'étend sensiblement perpendiculairement à la direction de déplacement D.

Selon le troisième mode de réalisation de l'invention, l'élément de séparation 13 est configuré pour former une paroi de fond du compartiment de cuisson principal 16 et pour recouvrir le dispositif de chauffage inférieur 12 lorsque l'élément de séparation 13 occupe la deuxième position.

L'élément de séparation 13 peut par exemple être configuré pour être déplacé manuellement entre les première et deuxième positions. Afin de faciliter la préhension et le déplacement de l'élément de séparation 13 entre les première et deuxième positions, l'élément de séparation 13 est avantageusement pourvu d'une partie de préhension 18 configurée pour à être saisie par un utilisateur.

Selon une variante de réalisation de l'invention, l'appareil de cuisson 1 pourrait comporter un mécanisme de déplacement configuré pour déplacer automatiquement l'élément de séparation 13 entre les première et deuxième positions. A cet effet, l'interface utilisateur est avantageusement configurée pour permettre à un utilisateur de sélectionner la configuration d'utilisation de l'appareil de cuisson 1 parmi les première et deuxième configurations d'utilisation, et l'unité de commande 17 est configurée pour commander le fonctionnement du mécanisme de déplacement en fonction de la configuration d'utilisation sélectionnée par l'utilisateur, de manière à déplacer automatiquement l'élément de séparation 13 entre les première et deuxième positions.

Les figures 11 et 12 représentent un appareil de cuisson 1 selon un quatrième mode de réalisation de l'invention qui diffère du deuxième mode de réalisation essentiellement en ce que la direction de déplacement D est sensiblement horizontale lorsque l'appareil de cuisson 1 repose sur une surface horizontale, et l'axe de pivotement de la porte 5 s'étend sensiblement parallèlement à la direction de déplacement D.

Selon le quatrième mode de réalisation de l'invention, l'élément de séparation 13 est configuré pour former une paroi latérale du compartiment de cuisson principal 16 lorsque l'élément de séparation 13 occupe la deuxième position.

Selon un mode de réalisation de l'invention non représenté sur les figures, l'appareil de cuisson 1 pourrait être configuré pour comporter plus de deux compartiments de cuisson lorsqu'il est dans la première configuration d'utilisation.

Selon un mode de réalisation de l'invention non représenté sur les figures, l'appareil de cuisson 1 pourrait comporter une première porte associée au premier compartiment de cuisson 14 et mobile entre une position de fermeture dans laquelle la première porte empêche un accès au premier compartiment de cuisson 14 et une position d'ouverture dans laquelle la première porte autorise l'accès au premier compartiment de cuisson 14, et une deuxième porte associée au deuxième compartiment de cuisson 15 et mobile entre une position de fermeture dans laquelle la deuxième porte empêche un accès au deuxième compartiment de cuisson 15 et une position d'ouverture dans laquelle la deuxième porte autorise l'accès au deuxième compartiment de cuisson 15. Une telle configuration de l'appareil de cuisson 1 permet de pouvoir accéder à l'un des premier et deuxième compartiments de cuisson 14, 15 en ouvrant la porte respective, sans impacter la cuisson des aliments disposés dans l'autres des premier et deuxième compartiments de cuisson 14, 15.

Selon une variante du mode de réalisation précédent, l'appareil de cuisson 1 peut comporter une première cuve de cuisson et une deuxième cuve de cuisson configurées pour recevoir des aliments à cuire et configurées respectivement pour être reçues au moins en partie respectivement dans le premier compartiment de cuisson 14 et dans le deuxième compartiment de cuisson 15.

Chacune de la première cuve de cuisson et de la deuxième cuve de cuisson comporte un corps de cuve et une poignée de préhension qui est fixée de manière amovible au corps de cuve respectif. Une telle configuration de l'invention permet l'insertion de la première cuve de cuisson et de la deuxième cuve de cuisson à l'intérieur de la chambre de cuisson 3, puis de retirer les poignées de préhension afin de ne pas encombrer inutilement la chambre de cuisson, ni de gêner la fermeture de la porte.

Avantageusement, la poignée de préhension équipant chacune des première et deuxième cuves de cuisson s'étend au moins en partie en regard d'une face avant du corps de cuve respectif.

En outre, la première cuve de cuisson et la deuxième cuve de cuisson sont configurées pour autoriser un déplacement libre de la porte ou de la première porte et de la deuxième porte entre la position de fermeture et la position d'ouverture lorsque la première cuve de cuisson et la deuxième cuve de cuisson sont situées respectivement à l'intérieur du premier compartiment de cuisson et du deuxième compartiment de cuisson.

Selon un autre mode de réalisation de l'invention non représenté sur les figures, l'appareil de cuisson 1 comporte un dispositif de génération de vapeur configuré pour générer un flux de vapeur dans la chambre de cuisson 3. Plus précisément, un aliment disposé dans le premier compartiment de cuisson 14 est apte à être en contact avec le flux de vapeur généré par le dispositif de génération de vapeur et un aliment disposé dans le deuxième compartiment de cuisson 15 est apte à être en contact avec le flux de vapeur généré par le dispositif de génération de vapeur lorsque l'appareil de cuisson 1 est dans la première configuration d'utilisation, et un aliment disposé dans le compartiment de cuisson principal 16 est apte à être en contact avec le flux de vapeur généré par le dispositif de génération de vapeur lorsque l'appareil de cuisson 1 est dans la deuxième configuration d'utilisation.

En outre, l'unité de commande UC est configurée pour commander le fonctionnement de l'appareil de cuisson 1 selon un mode de cuisson sous vapeur, et notamment pour commander le fonctionnement de l'appareil de cuisson simultanément selon un mode de cuisson à air chaud et sous vapeur. Plus particulièrement, l'unité de commande UC est configurée pour commande le fonctionnement du dispositif de génération de vapeur indépendamment du fonctionnement du dispositif de chauffage supérieur 8 et/ou du dispositif de chauffage inférieur 12 lorsque l'appareil de cuisson 1 est dans la première configuration d'utilisation ou dans la deuxième configuration d'utilisation.

Par exemple, l'appareil de cuisson 1 est configuré pour réaliser une cuisson qui combine l'utilisation du générateur de vapeur, du dispositif de chauffage supérieur 8 et du ventilateur 7 dans le premier compartiment de cuisson 14, et la réalisation simultanée d'une cuisson qui utilise uniquement le dispositif de chauffage inférieur 12 dans le deuxième compartiment de cuisson 15 par exemple. Une telle configuration de l'invention permet avantageusement de réaliser simultanément des cuissons différentes dans un même appareil de cuisson et ainsi de gagner du temps lors de la réalisation de préparations culinaires différentes.

Bien entendu, la présente invention n'est nullement limitée aux modes de réalisation décrits et illustrés qui n'ont été donnés qu'à titres d'exemples. Des modifications restent possibles notamment du point de vue de la constitution des divers éléments ou par substitution d'équivalents techniques, sans sortir pour autant du domaine de protection de l'invention.

## Revendications

1. Appareil de cuisson (1) configuré pour la cuisson d'aliments, l'appareil de cuisson (1) comportant au moins :
- une chambre de cuisson (3),
- un ventilateur (7) configuré pour générer un flux d'air dans la chambre de cuisson (3),
- une unité d'entraînement (9) configurée pour entrainer en rotation le ventilateur (7),
- un dispositif de chauffage supérieur (8) associé au ventilateur (7) et configuré pour chauffer le flux d'air généré par le ventilateur (7),
- un dispositif de chauffage inférieur (12) configuré pour chauffer la chambre de cuisson (3), et
- un élément de séparation (13) configuré pour être situé dans la chambre de cuisson (3),
**caractérisé en ce que** l'appareil de cuisson (1) présente une première configuration d'utilisation dans laquelle l'appareil de cuisson (1) comporte un premier compartiment de cuisson (14) et un deuxième compartiment de cuisson (15) qui sont délimités par la chambre de cuisson (3) et par l'élément de séparation (13), et dans laquelle un aliment disposé dans le premier compartiment de cuisson (14) est apte à être chauffé au moins par un parmi le dispositif de chauffage supérieur (8) et le dispositif de chauffage inférieur (12) et un aliment disposé dans le deuxième compartiment de cuisson (15) est apte à être chauffé au moins par un parmi le dispositif de chauffage supérieur (8) et le dispositif de chauffage inférieur (12), et une deuxième configuration d'utilisation dans laquelle l'appareil de cuisson (1) comporte un unique compartiment de cuisson principal (16) délimité au moins en partie par la chambre de cuisson (3) et dans laquelle un aliment disposé dans le compartiment de cuisson principal (16) est apte à être chauffé à la fois par le dispositif de chauffage supérieur (8) et le dispositif de chauffage inférieur (12).

2. Appareil de cuisson (1) selon la revendication 1, dans lequel le compartiment de cuisson principal (16) présente un volume de cuisson correspondant sensiblement à la somme des volumes de cuisson des premier et deuxième compartiments de cuisson (14, 15).

3. Appareil de cuisson (1) selon l'une quelconque des revendications 1 ou 2, dans lequel l'élément de séparation (13) présente une forme générale de plaque.

4. Appareil de cuisson (1) selon l'une quelconque des revendications 1 à 3, dans lequel la chambre de cuisson (3) comporte une ouverture d'accès (4), et l'appareil de cuisson (1) comporte une porte (5) mobile entre une position de fermeture dans laquelle la porte (5) ferme l'ouverture d'accès (4) et empêche un accès à la chambre de cuisson (3), et une position d'ouverture dans laquelle la porte (5) libère l'ouverture d'accès (4) et autorise l'accès à la chambre de cuisson (3).

5. Appareil de cuisson (1) selon la revendication 4, dans lequel la porte (5) est montée pivotante autour d'un axe de pivotement qui est sensiblement horizontal lorsque l'appareil de cuisson (1) repose sur une surface horizontale.

6. Appareil de cuisson (1) selon l'une quelconque des revendications 1 à 5, lequel comporte une première cuve de cuisson et une deuxième cuve de cuisson configurées pour recevoir des aliments à cuire et respectivement configurées pour être reçus au moins en partie dans le premier compartiment de cuisson (14) et le deuxième compartiment de cuisson (15).

7. Appareil de cuisson selon la revendication 6, dans lequel chacune de la première cuve de cuisson et de la deuxième cuve de cuisson comporte un corps de cuve et une poignée de préhension fixée de manière amovible au corps de cuve respectif.

8. Appareil de cuisson (1) selon l'une quelconque des revendications 1 à 7, présentant une première variante de la première configuration d'utilisation dans laquelle l'élément de séparation (13) est configuré pour s'étendre sensiblement horizontalement et les premier et deuxième compartiments de cuisson (14, 15) sont configurés pour être disposés l'un au-dessus de l'autre, lorsque l'appareil de cuisson (1) repose sur une surface horizontale.

9. Appareil de cuisson (1) selon l'une quelconque des revendications 1 à 7, présentant une deuxième variante de la première configuration d'utilisation dans laquelle l'élément de séparation (13) est configuré pour s'étendre sensiblement verticalement et les premier et deuxième compartiments de cuisson (14, 15) sont configurés pour être disposés l'un à côté de l'autre, lorsque l'appareil de cuisson (1) repose sur une surface horizontale.

10. Appareil de cuisson (1) selon l'une quelconque des revendications 1 à 9, dans lequel l'élément de séparation (13) est monté mobile dans la chambre de cuisson (3) entre une première position dans laquelle l'élément de séparation (13) et la chambre de cuisson (3) délimitent au moins le premier compartiment de cuisson (14) et le deuxième compartiment de cuisson (15), et une deuxième position dans lequel l'élément de séparation (13) et la chambre de cuisson (3) délimitent l'unique compartiment de cuisson principal (16).

11. Appareil de cuisson (1) selon la revendication 10, dans lequel l'élément de séparation (13) est monté mobile en translation par rapport à un bâti (2) de l'appareil de cuisson (1) selon une direction de déplacement (D).

12. Appareil de cuisson (1) selon la revendication 10 ou 11, dans lequel l'élément de séparation (13) est configuré pour former une paroi de fond du compartiment de cuisson principal (16) lorsque l'élément de séparation (13) occupe la deuxième position.

13. Appareil de cuisson (1) selon la revendication 10 ou 11, dans lequel l'élément de séparation (13) est configuré pour former une paroi latérale du compartiment de cuisson principal (16) lorsque l'élément de séparation (13) occupe la deuxième position.

14. Appareil de cuisson (1) selon l'une quelconque des revendications 1 à 13, dans lequel l'élément de séparation (13) est amovible, l'élément de séparation (13) étant situé dans la chambre de cuisson (3) lorsque l'appareil de cuisson (1) est dans la première configuration d'utilisation et pouvant être retiré de la chambre de cuisson (3) lorsque l'appareil de cuisson (1) est dans la deuxième configuration d'utilisation.

15. Appareil de cuisson (1) selon l'une quelconque des revendications précédentes, lequel comporte un dispositif de génération de vapeur configuré pour générer un flux de vapeur dans la chambre de cuisson (3).

16. Appareil de cuisson (1) selon la revendication 15, dans lequel un aliment disposé dans le premier compartiment de cuisson (14) est apte à être en contact avec le flux de vapeur généré par le dispositif de génération de vapeur et/ou un aliment disposé dans le deuxième compartiment de cuisson (15) est apte à être en contact avec le flux de vapeur généré par le dispositif de génération de vapeur lorsque l'appareil de cuisson (1) est dans la première configuration d'utilisation, et dans lequel un aliment disposé dans le compartiment de cuisson principal (16) est apte à être en contact avec le flux de vapeur généré par le dispositif de génération de vapeur lorsque l'appareil de cuisson (1) est dans la deuxième configuration d'utilisation.

17. Appareil de cuisson (1) selon la revendication 15 ou la revendication 16, lequel comporte une unité de commande (UC) configurée pour commander le fonctionnement du dispositif de génération de vapeur et simultanément commander le fonctionnement du dispositif de chauffage supérieur (8) et/ou du dispositif de chauffage inférieur (12) lorsque l'appareil de cuisson (1) est dans la première configuration d'utilisation ou dans la deuxième configuration d'utilisation.
